(19) Europäisches Patentamt
European Patent Office
Office européen des brevets

(11) Publication number: 0 246 031 B1

# (12) EUROPEAN PATENT SPECIFICATION

(45) Date of publication of patent specification: 24.07.91 Bulletin 91/30

(51) Int. Cl.$^5$: B01D 53/36

(21) Application number: 87304082.8

(22) Date of filing: 07.05.87

## (54) A method of oxidizing gaseous substances.

(30) Priority: 12.05.86 CA 508959

(43) Date of publication of application: 19.11.87 Bulletin 87/47

(45) Publication of the grant of the patent: 24.07.91 Bulletin 91/30

(84) Designated Contracting States: AT BE CH DE ES FR GB IT LI NL SE

(56) References cited:
DE-A- 2 236 497
FR-A- 2 063 216
US-A- 4 383 956

(73) Proprietor: Atomic Energy of Canada Limited L'Energie Atomique du Canada Limitée
344 Slater Street
Ottawa Ontario, K1A OS4 (CA)

(72) Inventor: Chuang, Karl T.
14717-45th Avenue
Edmonton Alberta T6H 5R4 (CA)
Inventor: McMonagle, James B Dept. of Materials Engineering
Industrial Chemistry National Institute of Higher Education Limerick (IE)
Inventor: Quaiattinl, Robert J.
22 Silvie Street
Deep River Ontario KOJ 1PO (CA)
Inventor: Seddon, William A.
15 Kennedy Place
Deep River Ontario KOJ 1PO (CA)
Inventor: Clegg, David Eldon
R.R. Nr.6
Pembroke Ontario K8A 6W7 (CA)

(74) Representative: Darby, David Thomas et al
Abel & Imray Northumberland House 303-306 High Holborn
London WC1V 7LH (GB)

EP 0 246 031 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a method of oxidizing gaseous substances.

Known oxidation catalysts for gases such as, for example, CO, alcohols having from 1 to 5 carbon atoms and aldehydes having 1 to 5 carbon atoms function very poorly, if at all, in the presence of liquid water and water vapor. Furthermore, these oxidation catalysts function very poorly, if at all, at ambient temperatures.

There is a need for a method of oxidizing these gases wherein the catalyst used will function satisfactorily in the presence of liquid water and water vapor and which function satisfactorily at ambient temperatures.

Ever since the sharp oil price increases in the mid 1970's, residents have been tightening up their homes against air leakage, to reduce energy consumption and save money. Because the conventional older home was so leaky, the air in it was replaced with outdoor air several times per hour. However, the air in today's energy efficient homes is exchanged as little as once every 5 hours. This can result in an accumulation of pollutants inside the home. One of these pollutants is carbon monoxide.

Carbon monoxide (CO) is a colorless, odorless gas that is extremely toxic. It has an affinity for blood oxyhemoglobin that is over 200 times greater than that of oxygen. The result is that blood will have a reduced capacity for carrying oxygen if breathing air contains CO. The effect is one of asphyxia. The American Council of Government Industrial Hygienists (ACGIH) recommends a threshold limit value time weighted average (TLV-TWA) for CO of 50 ppm for a typical 40 hour work week. Because of a wide variation of individual susceptibility, some people may experience discomfort at levels below the TLV-TWA recommended limit. In addition, it can be argued that the level of CO should be lower in the domestic environment where, for example, infants and children spend nearly their full day. There are no Federal guidelines in the United States regarding the long term exposure of occupants to CO in a domestic environment ; however, in Japan there is a guideline of a maximum of 10 ppm of CO for an environment inwhich occupants will be subjected to long term indoor exposure.

Thus there is a particular need for a method of oxidizing CO in homes which will function well at ambient temperatures.

There is also a need for a method of oxidizing CO in controlled environmental chambers. These include submarines and undersea diving bells and welding chambers. In at least some of these environments, the humidity levels can be high and the desirre for low power consumption is great.

There is a further need for a method of oxidizing CO for an efficient CO removal/filtering device for gas masks used, for example, by firetighters. If a suitable method existed, the need to carry bottled air for breathing could in many instances be eliminated.

The first, and well known and commonly used,method for carbon monoxide oxidation uses a catalyst that is a proprietary mixture of oxides of manganese and copper marketed under the tradename Hopcalite, by Mine Safety Appliance Company, Pittsburgh, U.S.A. This catalyst is used, for example, to remove CO from the ordinary breathing air in submarines. It has been shown that the catalyst is deactivated by adsorption of water vapor, and can only be used when the relative humidity level is low. In submarines, therefore, the catalyst is kept hot to prevent water adsorption. The second known method of CO oxidation uses transition metal catalysts. The carbon monoxide reaction on transition metals has been widely studied for many years. The pioneering work of Langmuir in this field has set the tone for much of the work that followed, see Langmuir, I., J.Am. Chem. Soc., 37, 1162, 1915 ; Trans. Faraday Soc., 621, 1922 ; Trans. Faraday Soc., 17, 672, 1922.

Practical application of transition metal catalysts for CO oxidation appeared, for example, in the first generation of catalytic converters for automobiles. The catalyst was required to reduce engine CO emission levels as legislated by various governments. These catalysts consisted of platinum and/or palladium deposited onto a highly porous high surface area alumina, with the alumina in the form either of 1.5 - 3 mm pellets or a "wash coat" on the walls of a ceramic or metal monolith.

It is well known that alumina is hydrophilic, that is, it has a tendency to attract and adsorb water vapor. Since catalytic converters operate at high temperature (500°C and higher), water vapor present in the gases passing through the converter does not condense in the pores of the alumina support material. Hence the catalyst performance remains high.

At ambient temperatures and high relative humidities, however, alumina does adsorb water, and the pores can rapidly become filled with condensed water vapor. Therefore, the type of catalyst used in the automobile catalytic converter cannot remain active for long periods of time unless it is heated to prevent water adsorption.

The third known method of CO oxidation uses a catalyst that is variant of what is commonly referred to as the Wacker process catalyst. In the commercial Wacker process, an aqueous solution of $CuCl_2$ containing traces of $PdCl_2$ is used in a vertical reactor to partially oxidize ethylene to acetaldhedyde with yields of about 95%, see Thomas, C.L., Catalytic Processes and Proven Catalysts, Academic Press, New York, 1970.

The variant of the Wacker process catalyst that has been shown to be active for oxidation of CO is the catalyst marketed under the tradename Low Temperature Catalyst (LTC) by Teledyne Water-Pik Inc., Fort Collins, Colorado, U.S.A. It consists of $CuCl_2$ with small amounts of $PdCl_2$, all supported on porous alumina beads, see Collins, M.F., The Catalysis Society, Ninth North American Meeting, Houston, Texas, 1985, March 17-21. While this catalyst has been shown to remain active over a wide humidity range, it suffers from loss of performance at humidity levels below about 20% or above 65%. This is a type of supported liquid phase catalyst; it is believed that a surface film of water exists on the alumina, providing a solution medium for the $CuCl_2/PdCl_2$ mixture. Inadequate water renders the catalytic agents inactive by reducing their mobility, while too high a level of moisture results in the pores of the alumina support filling with water, thereby increasing the diffusive resistance for the reactants. This latter case is a similar situation to what would occur with the auto exhaust converter type of alumina catalyst.

To summarize, known methods of CO oxidation use catalysts that suffer from an inability to function over a wide range of relative humidity levels, and the problem is particularly exacerbated at high humidity levels, and there is a particular need for a method of CO oxidation wherein the catalyst does not suffer from these drawbacks.

According to the present invention there is provided a method of oxidizing at least one gaseous substance selected from the group consisting of carbon monoxide, aldehydes having carbon atoms in the range 1 to 5, ketones having carbon atoms in the range 3 to 5, and alcohols having carbon atoms in the range 1 to 5, comprising contacting the gaseous substance, at a relative humidity in the range 0 to 100%, with a catalyst assembly at a temperature in the range -50 to 250°C, the gaseous substance being contacted with the catalyst assembly in the form of a minor amount of a gaseous mixture comprising the gaseous substance, an inert gas and an oxidizing gas therefor, the catalyst assembly comprising

a) a hydrophobic, porous support of at least one substance having a surface area in the range 50 to 1000 $m^2/g$ and selected from the group consisting of carbons having a contact angle of at least 50° at a temperature of 25°C in an aqueous environment, crystalline silica ($SiO_2$) essentially free of aluminium oxide in the $SiO_2$ lattice, silylated silica and styrene divinylbenzene polymers wherein the styrene monomers are of the formula

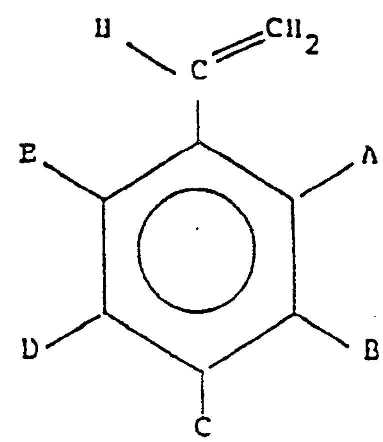

in which A to E are at least one substituent selected from the group consisting of hydrogen and lower alkyl ($C_1$ to $C_4$) groups, and a

b) catalytically active metal on the suport, the catalytically active metal consisting of at least one metal selected from the group consisting of chronium, molybdenum, tungsten, manganese, rhenium, iron, ruthenium, osnium, cobalt, rhodium, iridium, nickel, palladium, platinum, copper, and silver, the amount of catalytically active metal being in the range 0.1 to 22 wt % of the total weight of the support and catalytically active metal.

The gaseous substance may be at least one substance selected from the group consisting of carbon monoxide, ethanol, methanol, 2-propanone and formaldehyde.

Preferably, the surface area of the support is in the range 200 to 600 $m^2/g$.

The support may be of porous copolymerized styrene divinylbenzene.

The catalytically active metal may be platinum and at least one metal selected from the group consisting of iridium and rhodium, wherein one of the metals is present in the range 1 :1 to 40 :1 to that of the other catalytically active metal or metals.

In the some embodiments of the present invention the catalytically active metal comprises at least two metals selected from the group consisting of platinum, palladium, rhenium, osmium, irridium, cerium, nickel, rhodium and ruthenium, and one of the metals is present in the range 1 :1 to 40 :1 to that of the other metal or

metals present, and preferably one of the said at least two metals is platinum.

The catalyst operating temperature is determined by the initial temperature of the gas flowing to the catalyst, and by the heat generated by the reaction. The heat generated by the reaction itself is determined by three factors, the specific heat of reaction, the concentration of the reacting gases and the extent to which the reaction proceeds to completion. This can be expressed as follows :

$$\left\{\begin{matrix}\text{catalyst}\\\text{temper-}\\\text{ature}\end{matrix}\right\} = \left\{\begin{matrix}\text{gas}\\\text{temper-}\\\text{ature}\end{matrix}\right\} + \left\{\begin{matrix}\text{reactant}\\\text{concen-}\\\text{tration}\end{matrix}\right\} * \left\{\begin{matrix}\text{heat of}\\\text{reaction}\end{matrix}\right\} * \left\{\begin{matrix}\text{extent of}\\\text{reaction}\end{matrix}\right\}$$

and, as a person skilled in the art will readily understand, it is these parameters that are used to maintain the temperature of the catalyst in the range -50 to 250°C.

The oxygen of the gaseous mixture may be, for example, in the form of pure oxygen, air or ozone.

The following tests were made to verify the usefulness of catalysts used in methods according to the present invention for CO oxidation and a supported liquid phase Wacker type catalyst was used for comparison.

The supported liquid phase Wacker type catalyst was prepared by soaking alumina beads in a $CuCl_2/PdCl_2$ mixture prepared in the proportions taught by C. L. Thomas in the above publication. Six grams of catalyst was tested at room temperatures at an air flow of 2 L/minute containing 60 ppm CO.

Although the test results for the supported liquid phase Wacker type catalyst used in the text indicated a slightly poorer performance than the results given for a similar catalyst by M.F. Collins in the above publication, the trends are similar.

The following three catalysts used in methods according to the present invention were used in the tests :

Catalyst A : Porous supports of silica granules of size 5 - 10 mesh were platinized so that the platinum loading was between 5 wt % and 10 wt % of the total weight of the catalyst and then the granules were rendered hydrophobic by treatment with a methylsilane. Six grams of this catalyst was tested with 60 ppm of Co in an air flow of 2 L/min at room temperature.

Catalyst B : A hydrophobic porous plastic support of the type prepared by the copolymerization of divinylbenzene and styrene was platinized to yield a final loading of between 6 wt % and 10 wt % of the total weight of the catalyst metal and tested in a manner similar to that already described. At 0% relative humidity, conversion of CO to $CO_2$ was 25%. The humidity level was increased to 50% and conversion increased to 66%. When the humidity level was increased further to 100% the conversion increased to 83%.

Catalyst C : A further improvement to catalyst B was tested which comprised a mixture of between 5 wt % and 10 wt % platinum plus 3 wt % to 5 wt % rhodium, based on the total weight of the catalyst metal and the support on a similar hydrophobic plastic support to that used for catalyst B. Tests were performed on two grams of catalyst with air containing 60 and 700 ppm CO at a flow rate of 1.5 L/minute.

The results of the tests are given in the following Table I.

TABLE I

| Relative Humidity | Conversion (%) by volume of CO to $CO_2$ | | | | |
|---|---|---|---|---|---|
| | $PdCl_2/CuCl_2$ (6g) (Wacker Type) | Catalyst A (6g) | Catalyst B (6g) | Catalyst C (2g) | |
| | 60 ppm CO feed | 60 ppm CO feed | 60pmm CO feed | 60pmm CO feed | 700ppm CO feed |
| 0 | 40 | 100 | 25 | 100 | 62 |
| 50 | 80 | 100 | 66 | 85 | - |
| 100 | 30 | 100 | 83 | 60 | 70 |

In a second improvement to catalyst B, a catalyst was tested which comprised a mixture of 9% platinum and 1% rhodium on a hydrophobic plastic support. When 0.4 g of catalyst was tested with 1 L/min of dry air containing 50 ppm CO, 60 to 65% of the CO was reacted. Conversion of CO to $CO_2$ increased to 70% in the relative humidity range of 20 to 100%.

A hydrophobic porous plastic/polymeric support of the type prepared by co-polymerization of styrene and divinylbenzene was treated with a solution of the acid chloride salts of platinum and iridium to yield a final metal loading of about 10% with a ratio of Pt to Ir in solution of about 9 to 1. At room temperature and 50% relative humidity, 0.4g of this catalyst reduced the carbon monoxide content of air from 50 ppm to below 10 ppm at an air flow of 1 L/min.

Air at 34°C and 100% relative humidity containing 185 ppm by volume of ethanol was also passed over this catalyst. Temperature measurements indicated over 90% reaction of ethanol to carbon dioxide.

One gram of a catalyst similar to that described above, except that the metal loadings were doubled, was exposed to flowing dry air containing 2-propanone, and the effluent gas was monitored for water vapour (water vapour is one of the oxidation products). Water vapour was observed in the effluent air, indicating oxidation of 2-propanone.

A porous polymeric support similar to that mentioned above was treated with a solution of the acid chloride salt of iridium to yield a final iridium content of about 10%. At room temperature and 50% relative humidity, 0.4g of this catalyst reduced the carbon monoxide content of air from 50 ppm to below 1 ppm at an air flow of 1 L/min.

A porous polymeric support similar to that mentioned above was treated with a solution of the acid chloride salt of iridium to yield a final iridium content of about 1%. At room temperature and 50% relative humidity, 0.4 g of this catalyst reduced the carbon monoxide content of air from 50 ppm to 43 ppm at an air flow of 1 L/min.

In further tests to verify the usefulness of catalysts used in methods according to the present invention for the oxidation to $CO_2$ and water of formaldehyde (HCHO) in aqueous solutions, a conventional catalyst comprising platinum on hydrophilic silica was used for comparison.

In each of the tests, 1 g of catalyst was used with 200 mL of 1850 ppm formaldehyde in water and purging

of $CO_2$ from the reaction mixture was carried out with air.

The results of these tests are given in the following Table II.

TABLE II

| Catalyst | Reaction Temp. (°C) | Reaction Time (mins) | Conversion (%) by Volume |
|---|---|---|---|
| 10 wt % Pt on styrenedivinylbenzene | 90 | 60 | 93 |
| 10 wt % Pt on styrenedivinylbenzene | 25 | 120 | 11 |
| only styrenedivinylbenzene | 90 | 120 | 0 |
| 10 wt % Pt on Hydrophilic silica | 90 | 60 | 1 |

In the some embodiments of the present invention the hydrophobic support with the catalytically active metal thereon may be in the form of discrete particles deposited on a second, inert, conventional support such as a ceramic support or a metal screen. In these embodiments the discrete particles may be secured to the second support by means of a liquid-water-repellant, water vapor permeable, coating of an organic resin or polymer. The coating may be of polytetrafluoroethylene, a silicone, for example, a polysiloxane such as polyalkylsiloxane having substituent groups selected from hydroxyl, methoxyl, and ethoxyl or a polydimethylsiloxane having a minor amount of substituent groups selected from hydroxyl, methoxyl and ethoxyl and may include at least one substituent selected from the ethyl, propyl, isopropyl and t-butyl groups.

The crystalline silica ($SiO_2$) lattice essentially free of aluminum oxide in the $SiO_2$ lattice used for the support may be that known as "silicalite" and described in US-A-4061724, dated DECEMBER 6, 1977, R.W. Grose and E.M. Flanigen, and assigned to Union Carbide Corporation.

The method according to the present invention may be used to, for example :

i) convert CO into $CO_2$ ;

ii) oxidize aldehydes having carbon atoms in the range 1 to 5 (eg formaldehyde) ;

iii) oxidize alcohols having carbon atoms in the range 1 to 5 (eg ethanol and methanol), and

iv) oxidize ketones having carbon atoms in the range 3 to 5.

Catalyst assemblies used in methods according to the present invention are generally catalytically active for longer periods of time than oxidation catalyst assemblies used in known methods in the presence of liquid water and water vapour, and in many instances function well at ambient temperatures.

**Claims**

1. A method of oxidizing at least one gaseous substance selected from the group consisting of carbon monoxide, aldehydes having carbon atoms in the range 1 to 5, ketones having carbon atoms in the range 3 to 5, and alcohols having carbon atoms in the range 1 to 5, comprising contacting the gaseous substance, at a relative humidity in the range 0 to 100%, with a catalyst assembly at a temperature in the range -50 to 250°C, the gaseous substance being contacted with the catalyst assembly in the form of a minor amount of a gaseous mixture comprising the gaseous substance, an inert gas and an oxidizing gas therefor, the catalyst assembly comprising

a) a hydrophobic, porous support of at least one substance having a surface area in the range 50 to 1000 $m^2/g$ and selected from the group consisting of carbons having a contact angle of at least 50° at a temperature of 25°C in an aqueous environment, crystalline silica ($SiO_2$) essentially free of aluminium oxide in the $SiO_2$ lattice, silylated silica and styrene divinylbenzene polymers wherein the styrene monomers are of the formula

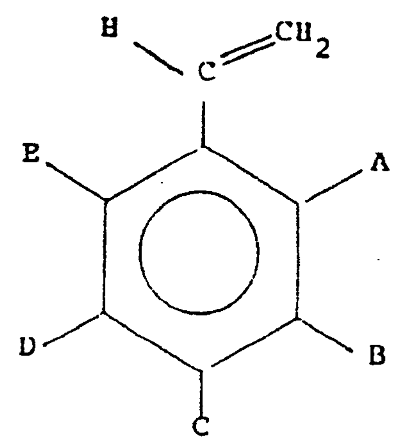

in which A to E are at least one substituent selected from the group consisting of hydrogen and lower alkyl ($C_1$ to $C_4$) groups, and a

b) catalytically active metal on the support, the catalytically active metal consisting of at least one metal selected from the group consisting of chronium, molybdenum, tungsten, manganese, rhenium, iron, ruthenium, osmium, cobalt, rhodium, iridium, nickel, palladium, platinum, copper, and silver, the amount of catalytically active metal being in the range 0.1 to 22 wt % of the total weight of the support and catalytically active metal.

2. A method according to claim 1, wherein the gaseous substance is at least one substance selected from the group consisting of carbon monoxide, ethanol, methanol, 2-propanone and formaldehyde.

3. A method according to claim 1 or claim 2, wherein the surface area of the support is in the range of 200 to 600 $m^2/g$.

4. A method according to any one of claims 1 to 3, wherein the support is of a porous copolymer of styrene divinylbenzene.

5. A method according to any one of claims 1 to 4, wherein the catalytically active metal comprises at least two metals selected from the group consisting of platinum, palladium, rhenium, osmium, iridium, cerium, nickel, rhodium and ruthenium, and one of the metals is present in the range 1 :1 to 40 :1 to that of the other metal or metals present.

6. A method according to any one of claims 1 to 4, wherein the catalytically active metal is platinum and at least one metal selected from the group consisting of iridium and rhodium, one of the metals being present in the range 1 :1 to 40 :1 to that of the other catalytically active metal or metals.

7. A method according to claim 5, wherein one of the said at least two metals is platinum.

**Patentansprüche**

1.Verfahren zum Oxydieren mindestens einer gasförmigen Substanz, ausgewählt aus der Gruppe von Kohlenmonoxid, Aldehyden mit einem bis fünf Kohlenstoffatomen, Ketonen mit drei bis fünf Kohlenstoffatomen und Alkoholen mit einem bis fünf Kohlenstoffatomen, wobei in dem Verfahren die gasförmige Substanz mit einer

Katalysator-Anordnung bei einer relativen Feuchtigkeit von 0 bis 100 % und bei einer Temperatur von - 50 bis 250° C in Kontakt gebracht wird, wobei die gasförmige Substanz mit der Katalysator-Anordnung in Form eines kleineren Anteils an einer Gasmischung in Kontakt gebracht wird, welche die gasförmige Substanz, ein Inertgas und ein hierfür oxydierend wirkendes Gas umfaßt, und wobei die Katalysator-Anordnung folgende Merkmale aufweist:

a) einen hydrophoben, porösen Träger aus mindestens einer Substanz, welche eine Oberfläche von 50 bis 1000 $m^2$ pro Gramm aufweist und welche ausgewählt ist aus der Gruppe von Kohle, welche einen Kontaktwinkel in wäßriger Umgebung von mindestens 50° bei einer Temperatur von 25° C zeigt, Kristallinem Siliciumdioxid ($SiO_2$), welches im wesentlichen frei von Aluminiumoxid in dem $Sio_2$-Gitter ist, silyliertem Siliciumdioxid und Styrol-Divinylbenzol-Polymeren, wobei die Styrol-Monomeren der Formel

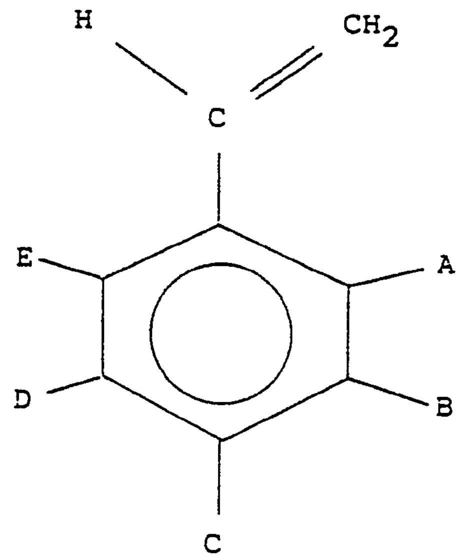

genügen, bei der von den Gruppen A bis E mindestens einer der Substituenten aus der Reihe Wasserstoff und niedere Alkyl-Gruppen ($C_1$ bis $C_4$) ausgewählt ist, und

b) eine auf dem Träger aufgebrachte katalytisch aktive Metallkomponente, wobei die katalytisch aktive Metallkomponente aus mindestens einem der Metalle, ausgewählt aus der Gruppe Chrom, Molybdän, Wolfram, Mangan, Rhenium, Eisen, Ruthenium, Osmium, Kobalt, Rhodium, Iridium, Nickel, Palladium, Platin, Kupfer und Silber besteht und wobei die Menge der katalytisch aktiven Metallkomponente im Bereich von 0,1 bis 22 Gew. % des Gesamtgewichts des Trägers und der katalytisch aktiven Metallkomponente beträgt.

2. Verfahren nach Anspruch 1, wobei die gasförmige Substanz mindestens eine Substanz, ausgewählt aus der Reihe Kohlenmonoxid, Ethanol, Methanol, 2-Propanon und Formaldehyd enthält.

3. Verfahren nach Anspruch 1 oder 2, wobei die Oberfläche des Trägers im Bereich von 200 bis 600 $m^2$ pro Gramm liegt.

4. Verfahren nach einem der Ansprüche 1 bis 3, wobei der Träger ein poröses Copolymer aus Styrol-Divinylbenzol ist.

5. Verfahren nach einem der Ansprüche 1 bis 4, wobei die katalytisch aktive Metallkomponente mindestens zwei Metalle aus der Gruppe Platin, Palladium, Rhenium, Osmium, Iridium, Cer, Nickel, Rhodium und Ruthenium umfaßt und eines der Metalle im Verhältnis zum anderen Metall oder den anderen Metallen von 1 :1 bis 40 :1 vorhanden ist.

6. Verfahren nach einem der Ansprüche 1 bis 4, wobei die katalytisch aktive Metallkomponente Platin und mindestens ein Metall aus der Gruppe Iridium und Rhodium umfaßt, wobei eines der Metalle im Verhältnis zum anderen katalytisch aktiven Metall oder den katalytisch aktiven Metallen von 1 :1 bis 40 :1 vorhanden ist.

7. Verfahren nach Anspruch 5, wobei Platin eines der mindestens zwei Metalle ist.

## Revendications

1. Méthode d'oxydation d'au-moins une substance gazeuse prise dans le groupe comprenant le monoxyde de carbone, des adhéhydes ayant de 1 à 5 atomes de carbone, des cétones ayant de 3 à 5 atomes de carbone, et des alcools ayant de 1 à 5 atomes de carbone, comprenant la mise en contact de la structure gazeuse à

une humidité relative comprise entre 0 et 100%, avec un assemblage catalytique à une température comprise entre -50 et 250°C, ladite substance gazeuse étant mise en contact avec l'assemblage catalytique sous la forme d'une quantité mineure d'un mélange gazeux comprenant la substance gazeuse, un gaz inerte et un gaz oxydant ladite susbtance, l'assemblage catalytique comprenant :

a) un support poreux hydrophobe d'une substance ayant une étendue de surface comprise entre 50 et 1000 $m^2/g$ et prise dans le groupe constitué de substances comprenant des carbones ayant un angle de contact d'au moins 50° à une température de 25°C dans un environnement aqueux, de silice cristalline ($SiO_2$) substantiellement dépourvue d'oxyde d'aluminium dans le réseau de $SiO_2$, de silice portant des groupes silyles et de polymères de divinylbenzene styrène dans lesquels les monomères de styrène répondent à la formule :

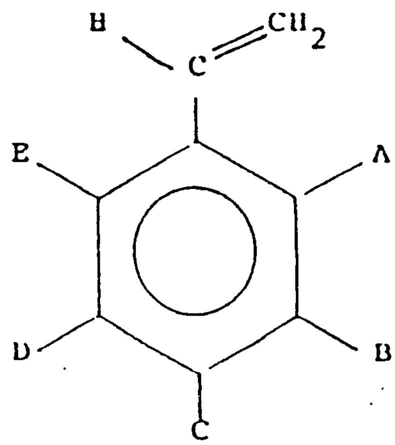

dans laquelle A et E sont au moins un substituant pris dans le groupe constitué de l'atome d'hydrogène et de groupements alkyles inférieurs ($C_1$ à $C_4$), et

b) un métal actif catalytiquement sur le support, le métal actif catalytiquement étant constitué d'au-moins un métal, sélectionné dans le groupe comprenant le chrome, le molybdène, le tungstène, le manganèse, le rhenium, le fer, le ruthenium, l'osmium, le cobalt, le rhodium, l'iridium, le nickel, le palladium, le platine, le cuivre et l'argent, la quantité de métal actif catalytiquement étant comprise dans la gamme allant de 0,1 à 22% en poids du poids total du support et du métal actif catalytiquement.

2. Méthode selon la revendication 1 dans laquelle la substance gazeuse est au moins une substance comprise dans le groupe constitué du monoxyde de carbone, de l'éthanol, du méthanol, du 2-propanone et du formaldéhyde.

3. Méthode selon l'une des revendications 1 et 2 dans laquelle l'étendue de surface du support est comprise dans la gamme allant de 200 à 600 $m^2/g$.

4. Méhtode selon l'une des revendications 1 à 3 dans laquelle le support est un copolymère poreux de divinylbenzène styrène.

5. Méthode selon l'une des revendications 1 à 4 dans laquelle le métal actif catalytiquement est constitué d'au-moins deux métaux sélectionnés dans le groupe constitué du platine, du palladium, du rhénium, de l'osmium, de l'iridium, du cerium, du nickel, du rhodium et du ruthenium, et dans laquelle un des métaux est présent dans la gamme allant de 1 :1 à 40 :1 par rapport à l'autre ou aux autres métaux présents.

6. Méthode selon l'une des revendications 1 à 4 dans laquelle le métal actif catalytiquement est le platine et au moins un métal pris dans le groupe constitué de l'iridium et du rhodium, un des métaux étant prsent dans la gamme comprise entre 1 :1 et 40 :1 par rapport à l'autre ou aux autres métaux catalytiquement actifs.

7. Méthode selon la revendication 5 dans laquelle le platine constitue l'un desdits au moins deux métaux.